# FASCICULE DE BREVET EUROPEEN

(11) **EP 3 741 202 B1**
(45) Date de publication et mention de la délivrance du brevet: **04.05.2022**
(21) Numéro de dépôt: 20161077.1
(22) Date de dépôt: 05.03.2020
(51) Int. Cl.: A01G 17/02

(54) **PRÉTAILLEUSE ÉQUIPÉE D'AU MOINS UN ARBRE MÉCANO-SOUDÉ**
VORSCHNEIDEGERÄT, DAS MIT MINDESTENS EINER MECHANISCH GESCHWEISSTEN WELLE AUSGESTATTET IST
PRE-CUTTING MACHINE PROVIDED WITH AT LEAST ONE MECHANICALLY WELDED SHAFT

(30) Priorité: 19.04.2019 FR 1904203
(43) Date de publication de la demande: 25.11.2020
(73) Titulaire: Ferrand, 11620 Villmoustaussou (FR)
(72) Inventeur: TROUVEL, Serge, 66000 Perpignan (FR)
(74) Mandataire: Fantin, Laurent

(56) Documents cités:
- EP-A1- 1 825 744
- EP-A1- 2 055 180
- FR-A1- 2 917 944

## Description

La présente demande se rapporte à une prétailleuse équipée d'au moins un arbre mécano-soudé.

Une prétailleuse est une machine agricole qui peut être reliée à un engin motorisé tel qu'un tracteur ou un enjambeur par exemple, et qui permet de tailler les rameaux, sarments, tiges ou branches des pieds de vigne ou de toute autre culture palissée.

Selon un mode de réalisation connu décrit par exemple dans le document FR2917944, une prétailleuse comprend un châssis solidarisé à un engin motorisé, supportant deux têtes configurées pour être positionnées de part et d'autre d'un rang de vigne.

Chaque tête comprend un arbre vertical entraîné en rotation par un moteur, une pluralité de disques emmanchés sur l'arbre ainsi qu'une pluralité d'entretoises intercalées entre les disques afin de les maintenir écartés. Ainsi, chaque tête comprend un empilage de disques et d'entretoises agencés de manière alternée. Cet empilage est immobilisé en translation par rapport à l'arbre grâce à deux butées solidaires de l'arbre positionnées l'une au-dessus de l'empilage et l'autre au-dessous de l'empilage.

Compte tenu de cet agencement, les têtes ne peuvent être utilisées que si l'empilage de disques et d'entretoises est complet. Par conséquent, il n'est pas possible de régler la hauteur de coupe, en retirant par exemple les disques de la partie inférieure de chaque tête. Si l'utilisateur souhaite tailler uniquement la partie supérieure des rangs de vigne, il est nécessaire qu'il ajuste la hauteur de l'ensemble constitué du châssis et des têtes pour n'utiliser que la partie inférieure des têtes. Le fait de devoir déplacer cet ensemble complexifie la prétailleuse et conduit à augmenter son coût.

La présente invention vise à remédier à tout ou partie des inconvénients de l'art antérieur.

A cet effet, l'invention a pour objet une prétailleuse comprenant un châssis ainsi que des première et deuxième têtes supportées par le châssis et disposées de part et d'autre d'un rang de plantes en fonctionnement, chaque tête comportant un support, un arbre présentant une extrémité supérieure et une extrémité inférieure, une liaison pivotante reliant l'extrémité supérieure de l'arbre et le support ainsi qu'une pluralité d'éléments de coupe supportés par l'arbre. Selon l'invention, chaque arbre comprend un cylindre et des groupes d'oreilles réparties régulièrement autour du cylindre, chaque élément de coupe présentant un trou central pour coulisser sur le cylindre et qui comprend autant de découpes que l'arbre comprend d'oreilles pour chaque élément de coupe.

Les arbres ont une conception relativement simple et sont réalisés chacun à partir d'un cylindre et d'oreilles reliées au cylindre par un assemblage de type mécano-soudé. Cette conception simple permet de réduire les coûts de fabrication.

Selon un autre avantage, les éléments de coupe peuvent être positionnés à la hauteur souhaitée sur chaque arbre.

Selon un premier mode de réalisation, chaque arbre comprend un cylindre et des couples d'oreilles diamétralement opposées, chaque élément de coupe présentant un trou central qui a un diamètre sensiblement égal au diamètre extérieur du cylindre et qui comprend deux découpes diamétralement opposées pour permettre le passage des oreilles.

Selon ce premier mode de réalisation, chaque arbre comprend un tube creux et, pour chaque couple d'oreilles, une plaquette, présentant deux extrémités, qui traverse le tube creux de sorte que les deux extrémités soient en saillie par rapport à la surface extérieure du tube creux et forment un couple d'oreilles. En complément, pour chaque plaquette, le tube creux comprend deux orifices de passage, diamétralement opposés, présentant chacun une section de passage sensiblement égale à la section transversale de la plaquette. Les plaquettes sont reliées au tube creux par au moins une soudure.

Selon un deuxième mode de réalisation, pour chaque élément de coupe, l'arbre comprend une bague support qui présente un diamètre intérieur approximativement égal au diamètre extérieur du cylindre, les oreilles étant prévues au niveau de la surface extérieure de la bague support. Chaque bague support est solidarisée au cylindre par au moins un cordon de soudure.

Selon une configuration, chaque bague support comprend trois oreilles formant entre elles un angle de 120°, les oreilles prévues pour un élément de coupe donné étant décalées de 60° par rapport aux oreilles prévues pour les éléments de coupe situés juste au-dessus ou juste au-dessous de l'élément de coupe donné.

D'autres caractéristiques et avantages ressortiront de la description de l'invention qui va suivre, description donnée à titre d'exemple uniquement, en regard des dessins annexés parmi lesquels :
- La figure 1 est une vue en perspective d'une prétailleuse en position rapprochée qui illustre un mode de réalisation de l'invention,
- La figure 2 est une vue en perspective de la prétailleuse visible sur la figure 1 en position écartée,
- La figure 3 est une vue de face de la prétailleuse visible sur la figure 1 en position rapprochée,
- La figure 4 est une vue de face de la prétailleuse visible sur la figure 1 en position écartée,
- La figure 5 est une vue de dessus des têtes de la prétailleuse visible sur la figure 1 en position rapprochée,
- La figure 6 est une vue de dessus des têtes de la prétailleuse visible sur la figure 1 en position écartée,
- La figure 7 est une vue de face d'un arbre équipé de plaquettes qui illustre un premier mode de réalisation de l'invention,
- La figure 8 est une vue de dessus de l'arbre visible sur la figure 7,
- La figure 9 est une vue de face de l'arbre vertical visible sur la figure 7 sans plaquette,
- La figure 10 est une vue de dessus d'une plaquette qui illustre le premier mode de réalisation de l'invention,
- La figure 11 est une vue de dessus d'un disque qui illustre le premier mode de réalisation de l'invention,
- La figure 12 est une coupe d'un système de fixation d'un élément de coupe qui illustre le premier mode de réalisation de l'invention,
- La figure 13 est une vue en perspective d'un arbre d'une prétailleuse qui illustre un deuxième mode de réalisation de l'invention,
- La figure 14 est une vue de dessus de l'arbre visible sur la figure 13,
- La figure 15 est une vue en perspective d'une bague support qui illustre le deuxième mode de réalisation de l'invention,
- La figure 16 est une vue de dessus d'un disque qui illustre le deuxième mode de réalisation, et
- La figure 17 est une vue de dessus de la bague support qui illustre le deuxième mode de réalisation.

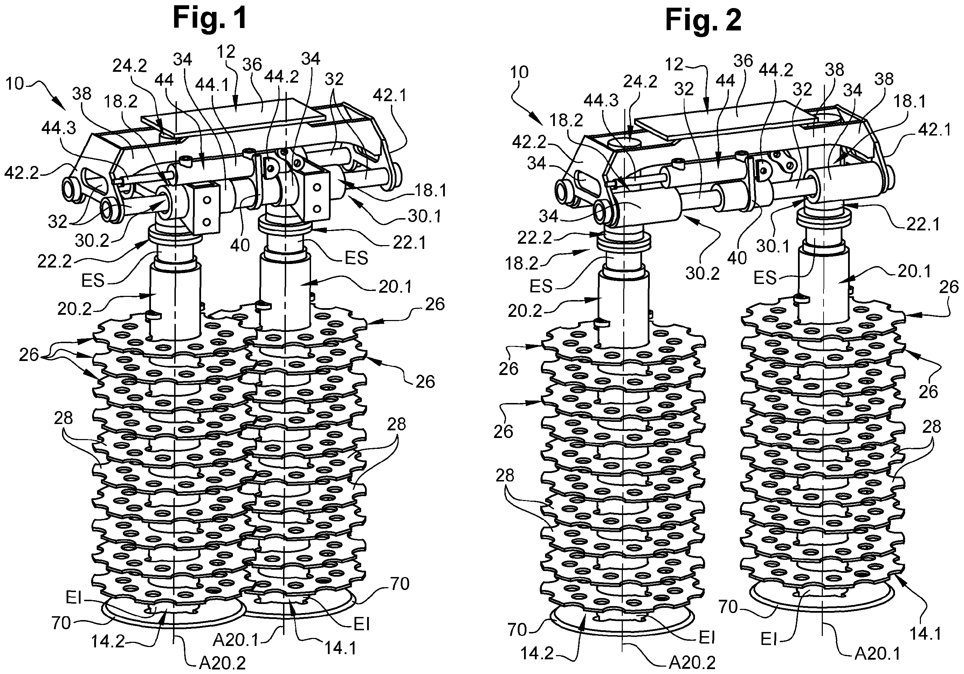

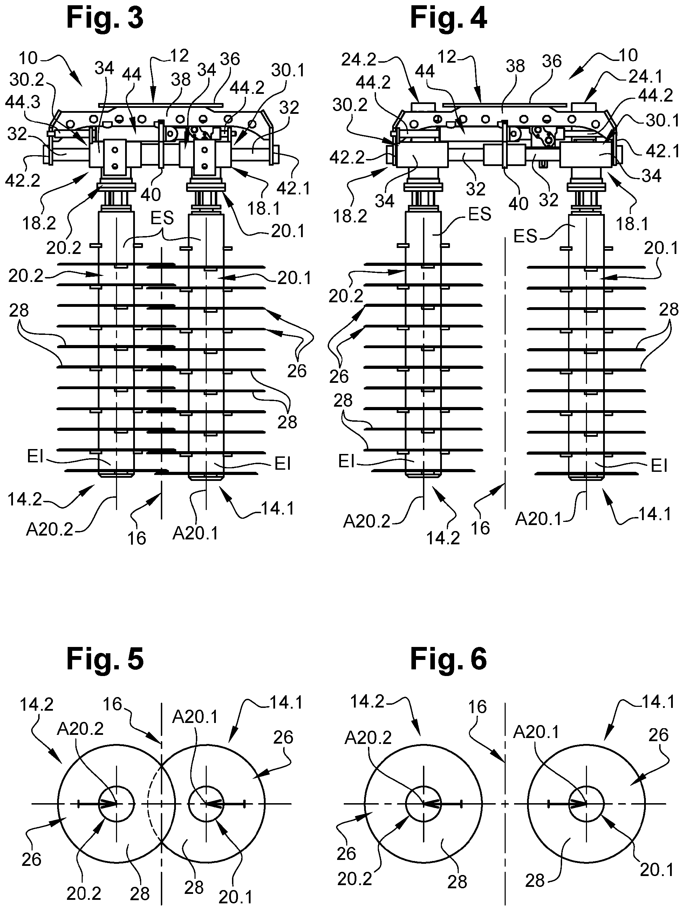

Sur les figures 1 à 4, on a représenté une prétailleuse 10 qui comprend un châssis 12 configuré pour être solidarisé à un engin motorisé (non représenté) ainsi que deux têtes 14.1, 14.2 supportées par le châssis 12 et disposées de part et d'autre d'un rang 16 de plantes (représenté de manière schématique sous la forme d'un trait d'axe sur les figures 3 et 4) en fonctionnement.

Chaque tête 14.1, 14.2 comprend un support 18.1, 18.2, un arbre 20.1, 20.2, approximativement vertical, présentant une extrémité supérieure ES et une extrémité inférieure El, une liaison pivotante 22.1, 22.2 reliant l'extrémité supérieure ES de l'arbre 20.1, 20.2 et le support 18.1, 18.2, une motorisation 24.1, 24.2 fixée sur le support 18.1, 18.2 et accouplée à l'arbre 20.1, 20.2 pour l'entraîner en rotation ainsi qu'une pluralité d'éléments de coupe 26 supportés par l'arbre 20.1, 20.2.

Les deux arbres 20.1, 20.4 des deux têtes 14.1, 14.2 sont parallèles.

Selon une configuration, chaque tête 14.1, 14.2 comprend une motorisation 24.1, 24.2 pour entraîner en rotation l'arbre 20.1, 20.2. Selon une autre configuration, la prétailleuse comprend une seule motorisation qui entraîne en rotation les arbres 20.1, 20.2 des deux têtes 14.1, 14.2. Quelle que soit la configuration, chaque arbre 20.1, 20.2 est entraîné en rotation en fonctionnement.

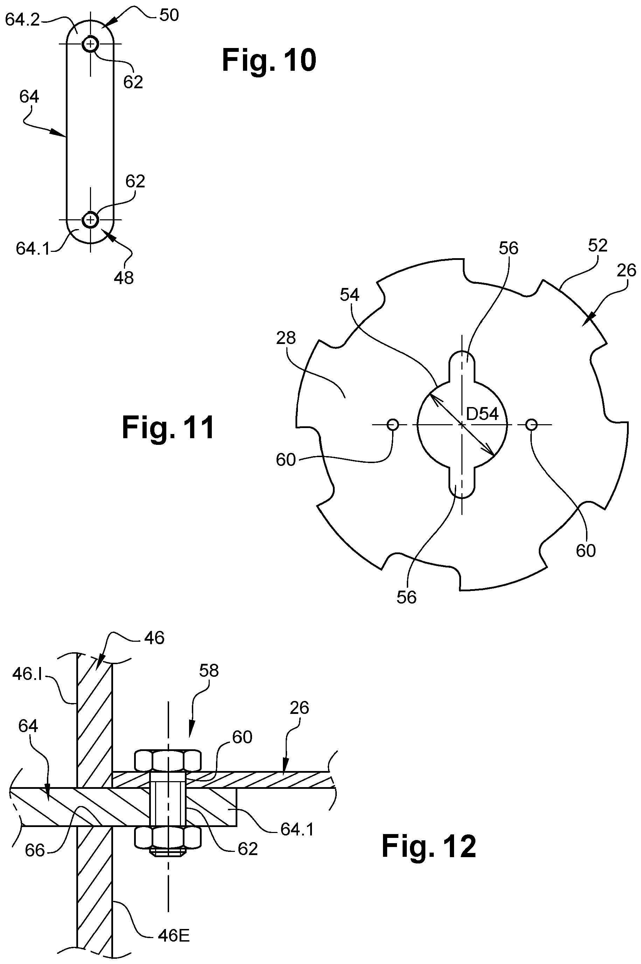

Selon une première configuration, chaque élément de coupe 26 des deux têtes 14.1, 14.2 comprend un disque 28 avec des bords tranchants (comme illustré sur la figure 11), positionné dans un plan perpendiculaire à l'axe A20.1, A20.2 de l'arbre 20.1, 20.2. Pour chacune des deux têtes 14.1, 14.2, les disques 28 sont répartis sur au moins une portion de la hauteur de l'arbre 20.1, 20.2 et de préférence régulièrement espacés. Les disques 28 d'une première tête 14.1 sont légèrement décalés selon une direction parallèle aux axes A20.1, A20.2 des arbres 20.1, 20.2 par rapport aux disques 28 de la deuxième tête 14.2. Ainsi, comme illustré sur la figure 3, chaque disque 28 de la première tête 14.1 est faiblement espacé, de l'ordre de quelques millimètres (inférieur à 10 mm), d'un disque 28 de la deuxième tête 14.2. Selon une autre configuration, l'une des têtes 14.1 comprend des éléments de coupe 26 sous la forme de disques tranchants 28, comme illustré sur la figure 11, et l'autre tête 14.2 comprend des éléments de coupe 26 sous la forme de contre-lames non tranchantes.

Au moins l'une des deux têtes est mobile entre une position rapprochée (visible sur les figures 1, 3 et 5) dans laquelle les éléments de coupe 26 des deux têtes 14.1, 14.2 se chevauchent en vue de dessus et coupent les rameaux, sarments, tiges ou branches et une position écartée (visible sur les figures 2, 4 et 6), par exemple pour permettre le passage de piquets, dans laquelle les éléments de coupe 26 des têtes 14.1, 14.2 sont espacés selon une direction transversale (perpendiculaire aux axes A20.1, A20.2 des arbres 20.1, 20.2 et contenue dans un plan transversal contenant les deux axes A20.1, A20.2 des arbres 20.1, 20.2), ne se chevauchent plus et ne coupent plus les rameaux, sarments, tiges ou branches. Selon un mode de réalisation, les deux têtes 14.1, 14.2 sont mobiles et configurées pour occuper une position rapprochée et une position écartée, les deux têtes 14.1, 14.2 étant symétriques par rapport au même plan médian dans les positions rapprochée et écartée. Selon un mode de réalisation de l'invention, le support 20.1, 20.2 d'au moins une tête 14.1, 14.2 est configuré pour se translater selon la direction transversale entre les positions rapprochée et écartée. A cet effet, la prétailleuse 10 comprend au moins une liaison glissière 30.1, 30.2 transversale reliant au moins un support 18.1, 18.2 et le châssis 12 de la prétailleuse. Ainsi, au moins un support 18.1 peut se translater selon un mouvement d'ouverture (mouvement de la position rapprochée vers la position écartée) lors duquel il s'éloigne de l'autre support 18.2 et selon un mouvement de fermeture (mouvement de la position écartée vers la position rapprochée) lors duquel il se rapproche de l'autre support 18.2.

Selon une configuration, chaque support 18.1, 18.2 est configuré pour se translater selon une direction transversale entre les positions rapprochée et écartée, les supports 18.1, 18.2 des deux têtes 14.1, 14.2 se déplaçant en sens opposé. Ainsi, les supports 18.1, 18.2 s'écartent du rang 16, de manière symétrique, lors du mouvement d'ouverture et se rapprochent du rang 16, de manière symétrique, lors du mouvement de fermeture.

Selon cette configuration, la prétailleuse 10 comprend deux liaisons glissières 30.1, 30.2, une pour chaque support 18.1, 18.2.

Selon un mode de réalisation, chaque glissière 30.1, 30.2 comprend deux barres cylindriques 32 espacées, parallèles et orientées selon la direction transversale. En complément, chaque support 18.1, 18.2 comprend deux douilles 34 configurées pour coulisser le long des barres cylindriques 32 ainsi qu'une plaque reliant les deux douilles 34 et supportant l'arbre 20.1, 20.2. Ainsi, les supports 18.1, 18.2 ne peuvent pas pivoter autour des barres cylindriques 32 et peuvent uniquement se translater le long ces dernières.

Selon un mode de réalisation, le châssis 12 comprend une platine 36, deux traverses 38 parallèles, positionnées dans des plans transversaux, reliées à la platine 36 et positionnées sous cette dernière, une aile médiane 40 reliant les deux traverses 38 et deux ailes latérales droite et gauche 42.1, 42.2 disposées de part et d'autre de l'aile médiane 40 de manière symétrique, reliant également les deux traverses 38. Les deux barres cylindriques 32 de la glissière 30.1 de la première tête 14.1 sont supportées à chacune de leurs extrémités par l'aile médiane 40 et l'aile latérale droite 42.1 alors que les deux barres cylindriques 32 de la glissière 30.2 de la deuxième tête 14.2 sont supportées à chacune de leurs extrémités par l'aile médiane 40 et l'aile latérale gauche 42.2.

La prétailleuse 10 comprend au moins un actionneur 44 pour assurer le déplacement en translation d'au moins un support 18.1, 18.2.

Selon un mode de réalisation, la prétailleuse comprend un unique actionneur 44 présentant un corps 44.1 relié au châssis 12 (plus particulièrement à l'aile médiane 40) et deux tiges 44.2, 44.3 à chacune des extrémités du corps 44.1, une première tige 44.2 reliée au premier support 18.1 supportant la première tête 14.1 et une deuxième tige 44.3 reliée au deuxième support 18.2 supportant la deuxième tête 14.2.

Bien entendu, la prétailleuse pourrait comprendre deux actionneurs, un pour chaque support 18.1, 18.2.

La prétailleuse 10 comprend un système d'asservissement pour contrôler le changement de position des têtes 14.1, 14.2. Selon une première configuration, le déclenchement du mouvement d'ouverture est manuel. Selon une autre configuration, le déclenchement des mouvements d'ouverture et de fermeture est automatique. Dans ce cas, le système d'asservissement comprend au moins un capteur configuré pour détecter des obstacles, comme des piquets par exemple.

Le système d'asservissement n'est pas plus décrit car il peut être identique à celui de l'art antérieur.

Contrairement à l'art antérieur, la masse de la tête est positionnée à l'aplomb de l'élément qui se déplace, ce qui génère moins d'inertie à masse égale.

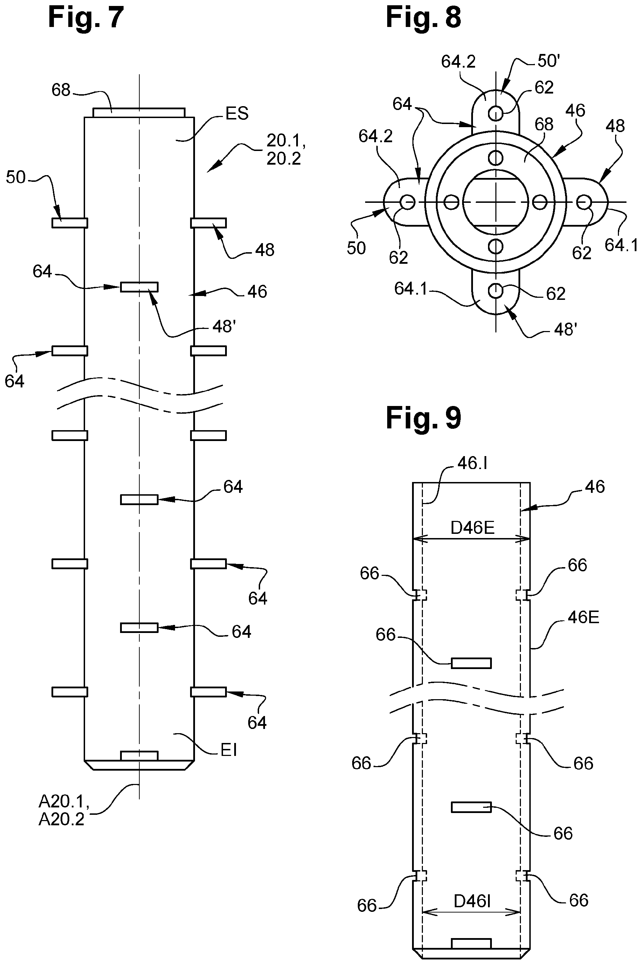

Selon un premier mode de réalisation visible sur les figures 7 à 10, chaque arbre 20.1, 20.2 comprend un tube creux 46 et un couple d'oreilles 48, 50 diamétralement opposées pour chaque élément de coupe 26.

Les oreilles 48, 50, prévues pour un élément de coupe 26 donné, sont décalées de 90° par rapport aux oreilles 48', 50' prévues pour les éléments de coupe 26 situés juste au-dessus ou juste au-dessous de l'élément de coupe 26 donné. Ainsi, comme illustré sur la figure 8, chaque arbre 20.1, 20.2 comprend une première série d'oreilles 48 alignées selon une première génératrice, une deuxième série d'oreilles 48' alignées selon une deuxième génératrice décalée de 90° par rapport à la première génératrice, une troisième série d'oreilles 50 alignées selon une troisième génératrice diamétralement opposée à la première génératrice ainsi qu'une quatrième série d'oreilles 50' alignées selon une quatrième génératrice diamétralement opposée à la deuxième génératrice.

Selon un mode de réalisation illustré par la figure 9, le tube creux 46 présente sur une surface extérieure 46E avec un diamètre extérieur D46E et une surface intérieure 46I avec un diamètre intérieur D46I.

Selon un mode de réalisation visible sur la figure 11, chaque élément de coupe 26 comprend un disque 28 avec un bord périphérique 52 tranchant et un trou central 54, coaxial au bord périphérique 52, qui présente un diamètre D54 sensiblement égal au diamètre extérieur D46E du tube creux 46 pour pouvoir être emmanché sur ce dernier.

Le trou central 54 comprend deux découpes 56 diamétralement opposées pour permettre le passage des oreilles 48, 48', 50, 50'. Ainsi, un disque 28 peut être emmanché sur chacun des arbres 20.1, 20.2 à partir de son extrémité inférieure El et coulisser sur l'arbre 20.1, 20.2 jusqu'à la hauteur souhaitée, le disque 28 franchissant chaque paire d'oreilles 48, 50 ou 48' 50' en faisant coopérer les découpes 56 avec les oreilles.

La prétailleuse comprend pour chaque élément de coupe 26 au moins un système de fixation 58 pour le relier à l'un des couples d'oreilles 48, 50 ; 48' 50', chaque élément de coupe 26 étant plaqué une fois assemblé au-dessus du couple d'oreilles 48, 50 ; 48', 50' auquel il est relié.

Selon un mode de réalisation, pour chaque disque 28, un système de fixation 58 est prévu pour chaque oreille 48, 50, 48', 50'. Selon un mode de réalisation visible sur la figure 12, donné à titre d'exemple et non limitatif, chaque système de fixation 58 comprend une vis ou un boulon. En complément, chaque disque 28 comprend deux trous de passage 60 diamétralement opposés, positionnés à 90° par rapport aux découpes 56 et chaque oreille 48, 48', 50, 50' comprend un trou 62 lisse ou taraudé.

Selon un mode de réalisation, chaque arbre 20.1, 20.2 comprend, pour chaque couple d'oreilles 48, 50 ou 48', 50', une plaquette 64, présentant deux extrémités 64.1, 64.2, qui traverse le tube creux 46 de sorte que les deux extrémités 64.1, 64.2 soient en saillie par rapport à la surface extérieure 46E du tube creux 46 et forment un couple d'oreilles 48, 50 ; 48', 50'.

Pour chaque plaquette 64, le tube creux 46 comprend deux orifices de passage 66, diamétralement opposés, présentant chacun une section de passage sensiblement égale à la section transversale de la plaquette 64. Selon une configuration, chaque orifice de passage 66 a une section rectangulaire.

Ainsi, le tube creux 46 comprend une première série d'orifices de passage 66 alignés selon une première génératrice, une deuxième série d'orifices de passage 66 alignés selon une deuxième génératrice décalée de 90° par rapport à la première génératrice, une troisième série d'orifices de passage 66 alignés selon une troisième génératrice diamétralement opposée à la première génératrice ainsi qu'une quatrième série d'orifices de passage 66 alignés selon une quatrième génératrice diamétralement opposée à la deuxième génératrice.

Selon une configuration, les deux extrémités 64.1, 64.2 des plaquettes 64 sont arrondies. Les trous 62 sont positionnées au niveau des extrémités 64.1, 64.2 de manière à être situés en dehors du tube creux 46 lorsque les plaquettes 64 sont mises en place sur le tube creux 46. Selon un mode de réalisation, les plaquettes 64 sont reliées au tube creux 46 par au moins une soudure lorsqu'elles sont mises en place.

Chaque tube creux 46 présente une platine 68 soudée au niveau de l'extrémité supérieure ES du tube creux 46, ladite platine 68 permettant de solidariser le tube creux 46 à la liaison pivotante 22.1, 22.2 reliant l'extrémité supérieure ES de l'arbre 20.1, 20.2 et son support 18.1, 18.2.

Selon une configuration visible sur les figures 1 et 2, chaque tête 14.1, 14.2 comprend un disque 70 avec un bord périphérique non tranchant solidarisé à l'arbre 20.1, 20.2 de la même manière que les disques 28 avec un bord périphérique tranchant.

Pour donner un ordre de grandeur, le tube creux 46 a un diamètre intérieur D461 de l'ordre de 100 mm, un diamètre extérieur D46E de l'ordre de 120 mm, une longueur de l'ordre de 60 à 140 mm.

Chaque plaquette 64 a une longueur de l'ordre de 190 mm, une largeur de l'ordre de 40 mm et une épaisseur de l'ordre de 10 mm.

Les orifices de passage 66 ont chacun une hauteur de l'ordre de 10 mm et une largeur de l'ordre de 40 mm, correspondant à la section transversale d'une plaquette 64. Les orifices de passage 66 d'une même série sont espacés d'environ 140 mm et chaque série comprend 4 à 6 orifices de passage 66. Les orifices de passage 66 d'une série sont positionnés à équidistance des orifices de passage 66 des séries décalées de 90°.

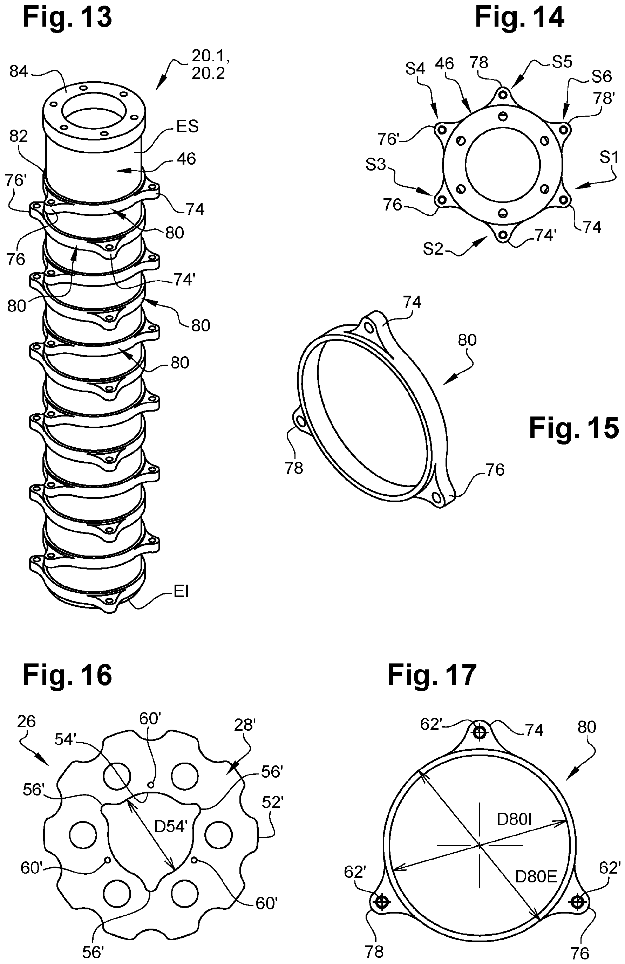

Selon un deuxième mode de réalisation visible sur les figures 13 à 17, chaque arbre 20.1, 20.2 comprend un tube creux 46 et un groupe d'oreilles 74, 76, 78 régulièrement réparties autour de l'arbre 20.1, 20.2 pour chaque élément de coupe 26.

Selon une configuration, pour chaque élément de coupe 26, l'arbre 20.1, 20.2 comprend trois oreilles 74, 76, 78 formant entre elles un angle de 120°.

Les oreilles 74, 76, 78 prévues pour un élément de coupe 26 donné sont décalées de 60° par rapport aux oreilles 74', 76', 78' prévues pour les éléments de coupe 26 situés juste au-dessus ou juste au-dessous de l'élément de coupe 26 donné.

Comme illustré en vue de dessus, l'arbre 20.1 20.2 comprend six séries d'oreilles, les première, troisième et cinquième séries S1, S3, S5 étant destinées aux éléments de coupe 26 impairs, les deuxième, quatrième et sixième séries S2, S4, S6 étant destinées aux éléments de coupe 26 pairs.

Comme précédemment, le tube creux 46 présente sur surface extérieure 46E avec un diamètre extérieur D46E et une surface intérieure 46l avec un diamètre intérieur D46l.

Selon un mode de réalisation visible sur la figure 16, chaque élément de coupe 26 comprend un disque 28' avec un bord périphérique 52' tranchant et un trou central 54', coaxial au bord périphérique 52', qui présente un diamètre D54' supérieur au diamètre extérieur D46E du tube creux 46 pour pouvoir être emmanché sur ce dernier.

Le trou central 54' comprend autant de découpes 56' que l'arbre 20.1, 20.2 comprend d'oreilles pour chaque élément de coupe 26, lesdites découpes 56' étant régulièrement réparties sur la périphérie du trou central 54'. Ainsi, selon la configuration visible sur la figure 16, le trou central 54' comprend trois découpes 56' formant un angle de 120° entre elles. Les découpes 56' sont dimensionnées pour permettre le passage des oreilles 74, 76, 78, 74', 76', 78'. Ainsi, un disque 28' peut être emmanché sur chacun des arbres 20.1, 20.2 à partir de son extrémité inférieure El et coulisser sur l'arbre 20.1, 20.2 jusqu'à la hauteur souhaitée, le disque 28' franchissant les oreilles 74, 76, 78, 74', 76', 78' en faisant coopérer les découpes 56' avec les oreilles.

Les disques 28' sont fixés sur les oreilles 74, 76, 78, 74', 76', 78' de la même manière que pour le premier mode de réalisation à l'aide d'une vis ou d'un boulon. Ainsi, chaque disque 28' comprend trois trous de passage 60' répartis autour du trou central 54' et formant entre eux un angle de 120°. En complément, chaque oreille 74, 76, 78, 74', 76', 78' comprend un trou 62' lisse ou taraudé.

Selon le deuxième mode de réalisation, pour chaque élément de coupe 26, l'arbre 20.1, 20.2 comprend une bague support 80 qui présente un diamètre intérieur D801 approximativement égal au diamètre extérieur D46E du tube creux 46. Ainsi, chaque bague support 80 peut coulisser le long du tube creux 46. La bague support 80 présente un diamètre extérieur D80E sensiblement égal au diamètre D54' du trou central 54' des disques 28 de manière à ce que chaque disque 28' puisse coulisser le long du tube creux 46 en franchissant les bagues supports 80. Les oreilles 74, 76, 78 ou 74', 76', 78' sont prévues au niveau de la surface extérieure de la bague support 80.

Selon un agencement, les bagues supports 80 sont régulièrement réparties sur au moins une partie de la longueur du tube creux 46.

Selon une configuration, chaque bague support 80 est solidarisée au tube creux 46 par au moins un cordon de soudure 82. A titre d'exemple, le cordon de soudure 82 s'étend sur toute la circonférence du tube creux 46.

Comme pour le premier mode de réalisation, chaque tube creux 46 présente une platine 84 soudée au niveau de l'extrémité supérieure ES du tube creux 46, ladite platine 84 permettant de solidariser le tube creux 46 à la liaison pivotante 22.1, 22.2 reliant l'extrémité supérieure ES de l'arbre 20.1, 20.2 et son support 18.1, 18.2.

Les arbres 20.1, 20.2 ont une conception relativement simple et sont réalisés chacun à partir d'un tube creux 46 et d'oreilles reliées au tube creux par un assemblage de type mécano-soudé. Cette conception simple permet de réduire les coûts de fabrication et la masse de chaque tête 20.1, 20.2.

Selon un autre avantage, dans la mesure où l'espacement entre les éléments de coupe 26 ne découle pas de la mise en place d'entretoises intercalées entre eux, les éléments de coupe 26 peuvent être positionnés à la hauteur souhaitée sur chaque arbre 20.1, 20.2. Ainsi, les éléments de coupe 26 sont positionnés sur la portion supérieure de chaque arbre 20.1, 20.2 si seule la partie supérieure des rangs 16 doit être taillée. Contrairement à l'art antérieur, il n'est plus nécessaire d'ajuster la hauteur de l'ensemble formé par le châssis et les têtes pour ne tailler que la partie supérieure des rangs.

Bien entendu, le tube creux pourrait être remplacé par un cylindre plein. Quel que soit le mode de réalisation, l'arbre 20.1, 20.2 comprend un cylindre qui peut être plein ou creux (comme un tube creux 46).

## Revendications

1. Prétailleuse comprenant un châssis (12) ainsi que des première et deuxième têtes (14.1, 14.2) supportées par le châssis (12) et disposées de part et d'autre d'un rang (16) de plantes en fonctionnement, chaque tête (14.1, 14.2) comportant un support (18.1, 18.2), un arbre (20.1, 20.2) présentant une extrémité supérieure (ES) et une extrémité inférieure (El), une liaison pivotante (22.1, 22.2) reliant l'extrémité supérieure (ES) de l'arbre (20.1, 20.2) et le support (18.1, 18.2) ainsi qu'une pluralité d'éléments de coupe (26) supportés par l'arbre (20.1, 20.2), au moins l'une des première et deuxième têtes (14.1, 14.2) étant mobile entre une position rapprochée dans laquelle les éléments de coupe (26) des première et deuxième têtes (14.1, 14.2) se chevauchent en vue de dessus et une position écartée dans laquelle les éléments de coupe (26) des première et deuxième têtes (14.1, 14.2) sont espacés selon une direction transversale, **caractérisée en ce que** chaque arbre (20.1, 20.2) comprend un cylindre et des groupes d'oreilles (48, 50 ; 48', 50' ; 74, 76, 78 ; 74', 76', 78') réparties régulièrement autour du cylindre, chaque élément de coupe (26) présentant un trou central (54, 54') pour coulisser sur le cylindre et qui comprend autant de découpes (56, 56') que l'arbre (20.1, 20.2) comprend d'oreilles pour chaque élément de coupe (26).

2. Prétailleuse selon la revendication précédente, **caractérisée en ce que** chaque arbre (20.1, 20.2) comprend un cylindre et des couples d'oreilles (48, 48' 50, 50') diamétralement opposées, chaque élément de coupe (26) présentant un trou central (54) qui a un diamètre (D54) sensiblement égal au diamètre extérieur (D46E) du cylindre et qui comprend deux découpes (56) diamétralement opposées pour permettre le passage des oreilles (48, 48', 50, 50').

3. Prétailleuse selon la revendication précédente, **caractérisée en ce que** chaque arbre (20.1, 20.2) comprend une première série d'oreilles (48) alignées selon une première génératrice, une deuxième série d'oreilles (48') alignées selon une deuxième génératrice décalée de 90° par rapport à la première génératrice, une troisième série d'oreilles (50) alignées selon une troisième génératrice diamétralement opposée à la première génératrice ainsi qu'une quatrième série d'oreilles (50') alignées selon une quatrième génératrice diamétralement opposée à la deuxième génératrice.

4. Prétailleuse selon la revendication 2 ou 3, **caractérisée en ce que** le cylindre est un tube creux (46) et **en ce que** chaque arbre (20.1, 20.2) comprend, pour chaque couple d'oreilles (48, 50 ; 48', 50'), une plaquette (64), présentant deux extrémités (64.1, 64.2), qui traverse le tube creux (46) de sorte que les deux extrémités (64.1, 64.2) soient en saillie par rapport à la surface extérieure (46E) du tube creux (46) et forment un couple d'oreilles (48, 50 ; 48', 50') et **en ce que**, pour chaque plaquette (64), le tube creux (46) comprend deux orifices de passage (66), diamétralement opposés, présentant chacun une section de passage sensiblement égale à la section transversale de la plaquette (64).

5. Prétailleuse selon la revendication précédente, **caractérisée en ce que** les plaquettes (64) sont reliées au tube creux (46) par au moins une soudure.

6. Prétailleuse selon la revendication 1, **caractérisée en ce que**, pour chaque élément de coupe (26), l'arbre (20.1, 20.2) comprend une bague support (80) qui présente un diamètre intérieur (D80I) approximativement égal au diamètre extérieur (D46E) du cylindre, les oreilles (74, 76, 78 ; 74', 76', 78') étant prévues au niveau de la surface extérieure de la bague support (80).

7. Prétailleuse selon la revendication précédente, **caractérisée en ce que** chaque bague support (80) est solidarisée au cylindre par au moins un cordon de soudure (82).

8. Prétailleuse selon la revendication 6 ou 7, **caractérisée en ce que** chaque bague support (80) comprend trois oreilles (74, 76, 78 ; 74', 76', 78') formant entre elles un angle de 120°, les oreilles (74, 76, 78) prévues pour un élément de coupe (26) donné étant décalées de 60° par rapport aux oreilles (74', 76', 78') prévues pour les éléments de coupe (26) situés juste au-dessus ou juste au-dessous de l'élément de coupe (26) donné.

9. Prétailleuse selon l'une des revendications 6 à 8, **caractérisée en ce que** le cylindre est un tube creux (46).

10. Prétailleuse selon l'une des revendications précédentes, **caractérisée en ce qu'**elle comprend, pour chaque élément de coupe (26), au moins un système de fixation (58) pour le relier à l'une des d'oreilles (48, 50 ; 48', 50' ; 74, 76, 78 ; 74', 76', 78'), chaque élément de coupe (26) étant plaqué une fois assemblé au-dessus des oreilles (48, 50 ; 48', 50' ; 74, 76, 78 ; 74', 76', 78') auxquelles il est relié.

11. Prétailleuse selon l'une des revendications précédentes, **caractérisée en ce que** la prétailleuse comprend au moins une liaison glissière (30.1, 30.2) transversale reliant au moins un des supports (18.1, 18.2) et le châssis (12) afin que la tête (14.1, 14.2) dudit support (20.1, 20.2) puisse se translater selon la direction transversale entre les positions rapprochée et écartée.

## Patentansprüche

1. Vorschneidegerät mit einem Rahmen (12) sowie mit einem ersten und einem zweiten Kopf (14.1, 14.2), die von dem Rahmen (12) getragen sind und im Betrieb beidseits einer Reihe (16) von Pflanzen angeordnet sind, wobei jeder Kopf (14.1, 14.2) einen Träger (18.1, 18.2), eine Welle (20.1, 20.2) mit einem oberen Ende (ES) und einem unteren Ende (El), eine Schwenkverbindung (22.1, 22.2), die das obere Ende (ES) der Welle (20.1, 20.2) und den Träger (18.1, 18.2) verbindet, sowie einer Vielzahl von Schneidelementen (26) aufweist, die von der Welle (20.1, 20.2) gehalten sind, wobei wenigstens einer der ersten und zweiten Köpfe (14.1, 14.2) zwischen einer angenäherten Position, in der sich die Schneidelemente (26) des ersten und zweiten Kopfes (14.1, 14.2) in der Draufsicht überlappen, und einer entfernten Position, in der die Schneidelemente (26) des ersten und zweiten Kopfes (14.1, 14.2) in einer Querrichtung beabstandet sind, bewegbar ist, **dadurch gekennzeichnet, dass** jede Welle (20.1, 20.2) einen Zylinder und Gruppen von Ohren (48, 50; 48', 50'; 74, 76, 78; 74', 76', 78') umfasst, die gleichmäßig um den Zylinder herum verteilt sind, wobei jedes Schneidelement (26) ein zentrales Loch (54, 54') zum Gleiten auf dem Zylinder aufweist und so viele Ausschnitte (56, 56') aufweist, wie die Welle (20.1, 20.2) Ohren für jedes Schneidelement (26) aufweist.

2. Vorschneidegerät nach dem vorhergehenden Anspruch, **dadurch gekennzeichnet, dass** jede Welle (20.1, 20.2) einen Zylinder und diametral gegenüberliegende Paare von Ohren (48, 48' 50, 50') umfasst, wobei jedes Schneidelement (26) ein zentrales Loch (54) aufweist, das einen Durchmesser (D54) hat, der im Wesentlichen gleich dem Außendurchmesser (D46E) des Zylinders ist, und das zwei diametral gegenüberliegende Ausschnitte (56) umfasst, um den Durchgang der Ohren (48, 48', 50, 50') zu ermöglichen.

3. Vorschneidegerät nach dem vorhergehenden Anspruch, **dadurch gekennzeichnet, dass** jede Welle (20.1, 20.2) eine erste Reihe von Ohren (48), die entlang einer ersten Erzeugenden ausgerichtet sind, eine zweite Reihe von Ohren (48'), die entlang einer zweiten Erzeugenden ausgerichtet sind, die um 90° gegenüber der ersten Erzeugenden versetzt ist, eine dritte Reihe von Ohren (50), die entlang einer dritten Erzeugenden ausgerichtet sind, die der ersten Erzeugenden diametral gegenüberliegt, sowie eine vierte Reihe von Ohren (50'), die entlang einer vierten Erzeugenden ausgerichtet sind, die der zweiten Erzeugenden diametral gegenüberliegt, umfasst.

4. Vorschneidegerät nach Anspruch 2 oder 3, **dadurch gekennzeichnet, dass** der Zylinder ein Hohlrohr (46) ist und dass jede Welle (20.1, 20.2) für jedes Paar Ohren (48, 50; 48', 50') ein Plättchen (64) mit zwei Enden (64.1, 64.2) umfasst, das durch das Hohlrohr (46) hindurch verläuft, so dass die beiden Enden (64.1, 64. 2) in Bezug auf die Außenfläche (46E) des Hohlrohrs (46) vorstehen und ein Ohrenpaar (48, 50; 48', 50') bilden, und dass das Hohlrohr (46) für jedes Plättchen (64) zwei diametral gegenüberliegende Durchgangsöffnungen (66) umfasst, von denen jede einen Durchgangsquerschnitt aufweist, der im Wesentlichen gleich dem Querschnitt des Plättchens (64) ist.

5. Vorschneidegerät nach dem vorhergehenden Anspruch, **dadurch gekennzeichnet, dass** die Plättchen (64) durch wenigstens eine Verschweißung mit dem Hohlrohr (46) verbunden sind.

6. Vorschneidegerät nach Anspruch 1, **dadurch gekennzeichnet, dass** die Welle (20.1, 20.2) für jedes Schneidelement (26) einen Haltering (80) umfasst, der einen Innendurchmesser (D80l) hat, der ungefähr gleich dem Außendurchmesser (D46E) des Zylinders ist, wobei die Ohren (74, 76, 78; 74', 76', 78') an der Außenseite des Halterings (80) vorgesehen sind.

7. Vorschneidegerät nach dem vorhergehenden Anspruch, **dadurch gekennzeichnet, dass** jeder Haltering (80) durch wenigstens eine Schweißnaht (82) fest mit dem Zylinder verbunden ist.

8. Vorschneidegerät nach Anspruch 6 oder 7, **dadurch gekennzeichnet, dass** jeder Haltering (80) drei Ohren (74, 76, 78; 74', 76', 78') aufweist, die untereinander einen Winkel von 120° bilden, wobei die für ein bestimmtes Schneidelement (26) vorgesehenen Ohren (74, 76, 78) gegenüber den für die Schneidelemente (26) vorgesehenen Ohren (74', 76', 78'), die direkt über oder direkt unter dem bestimmten Schneidelement (26) liegen, um 60° versetzt sind.

9. Vorschneidegerät nach einem der Ansprüche 6 bis 8, **dadurch gekennzeichnet, dass** der Zylinder ein Hohlrohr (46) ist.

10. Vorschneidegerät nach einem der vorhergehenden Ansprüche, **dadurch gekennzeichnet, dass** dieses für jedes Schneidelement (26) wenigstens ein Befestigungssystem (58) aufweist, um es mit einem der Ohren (48, 50; 48', 50'; 74, 76, 78; 74', 76', 78') zu verbinden, wobei jedes Schneidelement (26) im zusammengebauten Zustand oberhalb der Ohren (48, 50; 48', 50'; 74, 76, 78; 74', 76', 78'), mit denen es verbunden ist, angesetzt ist.

11. Vorschneidegerät nach einem der vorhergehenden Ansprüche, **dadurch gekennzeichnet, dass** das Vorschneidegerät wenigstens eine quer verlaufende Gleitverbindung (30.1, 30.2) umfasst, die wenigstens einen der Träger (18.1, 18.2) und den Rahmen (12) verbindet, so dass der Kopf (14.1, 14.2) des Trägers (20.1, 20.2) in Querrichtung zwischen der angenäherten und der entfernten Position translatorisch bewegbar ist.

## Claims

1. Pre-pruner comprising a frame (12) and first and second heads (14.1, 14.2) that are supported by the frame (12) and disposed on either side of a row (16) of plants during operation, each head (14.1, 14.2) having a support (18.1, 18.2), a shaft (20.1, 20.2) having an upper end (ES) and a lower end (El), a pivoting connection (22.1, 22.2) connecting the upper end (ES) of the shaft (20.1, 20.2) and the support (18.1, 18.2), and a plurality of cutting elements (26) supported by the shaft (20.1, 20.2), at least one of the first and second heads (14.1,14.2) being movable between a close-together position in which the cutting elements (26) of the first and second heads (14.1, 14.2) overlap when seen from above and a spaced-apart position in which the cutting elements (26) of the first and second heads (14.1, 14.2) are spaced apart in a transverse direction, **characterized in that** each shaft (20.1, 20.2) comprises a cylinder and groups of lugs (48, 50; 48', 50'; 74, 76, 78; 74', 76', 78') distributed regularly around the cylinder, each cutting element (26) having a central hole (54, 54') for sliding onto the cylinder and having as many recesses (56, 56') as the shaft (20.1, 20.2) comprises lugs for each cutting element (26).

2. Pre-pruner according to the preceding claim, **characterized in that** each shaft (20.1, 20.2) comprises a cylinder and pairs of diametrically opposite lugs (48, 48', 50, 50'), each cutting element (26) having a central hole (54) which has a diameter (D54) substantially equal to the outside diameter (D46E) of the cylinder and which comprises two diametrically opposite recesses (56) for the passage of the lugs (48, 48', 50, 50').

3. Pre-pruner according to the preceding claim, **characterized in that** each shaft (20.1, 20.2) comprises a first set of lugs (48) aligned along a first generatrix, a second set of lugs (48') aligned along a second generatrix offset through 90° with respect to the first generatrix, a third set of lugs (50) aligned along a third generatrix diametrically opposite the first generatrix, and a fourth set of lugs (50') aligned along a fourth generatrix diametrically opposite the second generatrix.

4. Pre-pruner according to Claim 2 or 3, **characterized in that** the cylinder is a hollow tube (46) and **in that** each shaft (20.1, 20.2) comprises, for each pair of lugs (48, 50; 48', 50'), a small plate (64), having two ends (64.1, 64.2), which passes through the hollow tube (46) such that the two ends (64.1, 64.2) protrude from the outer surface (46E) of the hollow tube (46) and form a pair of lugs (48, 50; 48', 50'), and **in that**, for each small plate (64), the hollow tube (46) comprises two diametrically opposite passage orifices (66) that each have a passage section substantially equal to the cross section of the small plate (64).

5. Pre-pruner according to the preceding claim, **characterized in that** the small plates (64) are connected to the hollow tube (46) by at least one weld.

6. Pre-pruner according to Claim 1, **characterized in that**, for each cutting element (26), the shaft (20.1, 20.1) comprises a support ring (80) which has an inside diameter (D80l) approximately equal to the outside diameter (D46E) of the cylinder, the lugs (74, 76, 78; 74', 76', 78') being provided on the outer surface of the support ring (80).

7. Pre-pruner according to the preceding claim, **characterized in that** each support ring (80) is secured to the cylinder by at least one weld bead (82).

8. Pre-pruner according to Claim 6 or 7, **characterized in that** each support ring (80) comprises three lugs (74, 76, 78; 74', 76', 78') that form an angle of 120° between one another, the lugs (74, 76, 78) provided for a given cutting element (26) being offset by 60° with respect to the lugs (74', 76', 78') provided for the cutting elements (26) situated just above or just below the given cutting element (26).

9. Pre-pruner according to one of Claims 6 to 8, **characterized in that** the cylinder is a hollow tube (46).

10. Pre-pruner according to one of the preceding claims, **characterized in that** it comprises, for each cutting element (26), at least one fixing system (58) for connecting it to one of the lugs (48, 50; 48', 50'; 74, 76, 78; 74', 76', 78'), each cutting element (26) being pressed once fitted on top of the lugs (48, 50; 48', 50'; 74, 76, 78; 74', 76', 78') to which it is connected.

11. Pre-pruner according to one of the preceding claims, **characterized in that** the pre-pruner comprises at least one transverse slideway connection (30.1, 30.2) connecting at least one of the supports (18.1, 18.2) and the frame (12) in order that the head (14.1, 14.2) of said support (20.1, 20.2) can move in translation in the transverse direction between the close-together and spaced-apart positions.
